(19) **Europäisches Patentamt / European Patent Office / Office européen des brevets**

(11) **EP 1 860 786 A1**

(12) **EUROPEAN PATENT APPLICATION**

(43) Date of publication:
28.11.2007 Bulletin 2007/48

(51) Int Cl.:
*H04B 7/00* (2006.01)  *H04B 7/212* (2006.01)
*H04J 3/16* (2006.01)

(21) Application number: 07116169.9

(22) Date of filing: 02.10.2003

(84) Designated Contracting States:
AT BE BG CH CY CZ DE DK EE ES FI FR GB GR HU IE IT LI LU MC NL PT RO SE SI SK TR
Designated Extension States:
AL BA HR MK YU

(30) Priority: 03.10.2002 US 415938 P

(62) Document number(s) of the earlier application(s) in accordance with Art. 76 EPC:
03776223.4 / 1 550 237

(71) Applicant: Interdigital Technology Corporation
Wilmington, DE 19810 (US)

(72) Inventor: Zhang, Guodong
Farmingdale, NY 11735 (US)

(74) Representative: Pierrou, Mattias
Awapatent AB
P.O. Box 45 086
104 30 Stockholm (SE)

Remarks:
This application was filed on 11 - 09 - 2007 as a divisional application to the application mentioned under INID code 62.

(54) **Determination of code transmit power range in downlink power control for cellular systems.**

(57)  A method and apparatus employing algorithms enabling cellular networks to determine the range of code transmit power in a frequency division duplex communication system.

200

*FIG. 2*

EP 1 860 786 A1

**Description**

FIELD OF THE INVENTION

This invention generally relates to cellular networks and more particularly to determination of code transmit power for use in power control.

BACKGROUND OF THE INVENTION

For a Universal Mobile Telecommunication System (UMTS) system, in the downlink there are a plurality of different codes transmitted for a plurality of different coded Composite Transport Channels (CCTrCHs) transmitting. Each CCTrCH is power controlled independently. At the receiver of the UE (a RAKE receiver is used for frequency division duplex (FDD), a multi-user detector (MUD) receiver is used for time division duplex (TDD)), the difference between the transmit power of two codes in the same cell has to be within a certain range to assure that the receiver works properly. The maximum allowed difference is called the dynamic range of the receiver. Because the total transmit power (i.e., carrier power) in the downlink is limited, an appropriate range of transmit power for each code should be determined to allow the power control to adjust the difference of code transmit powers to be in the dynamic range as much as possible.

Currently, there is no known convenient algorithm to determine the range of transmit power for each code in the downlink. The consequence of this is that the transmit power of one code can be increased to a very high value by the power control, which makes it difficult for the transmit power of other codes to catch up with the dynamic range due to the limit of Node B total transmitter power.

It is desirable to provide a method for determining the range of transmit power in the downlink, preferably in the form of an algorithm.

SUMMARY OF THE INVENTION

The invention provides a method and apparatus employing an algorithm for determining the range of transmit power for each code in the downlink properly for all modes of UMTS systems (including FDD, high chip rate (HCR) TDD, and low chip rate (LCR) TDD). In a preferred embodiment, the invention provides details of the preferred implementation. While the following description makes reference to downlink power control for CDMA systems as an example, it is to be noted that the invention is applicable for uplink power control and is also usable in cellular systems other than those mentioned above.

BRIEF DESCRIPTION OF THE DRAWINGS

A more detailed understanding of the invention may be had from the following description of preferred embodiments, given by way of example and to be understood in conjunction with the accompanying drawing wherein:

Figure 1 illustrates diagrammatically a first embodiment in the form of a flow chart for determination of code transmit power range in downlink; and

Figure 2 illustrates diagrammatically a second embodiment in the form of a flow chart.

The following acronyms are used in the present application:

| | |
|---|---|
| AWGN | additive white Gaussian noise |
| BLER | block error rate |
| CCTrCH | coded composite transport channel |
| CDMA | code-division multiple access |
| CRNC | controlling RNC |
| DR | dynamic range |
| FDD | frequency-division duplex |
| HCR | high chip rate |
| LCR | low chip rate |
| MUD | multi-user detector |
| RNC | radio network controller |
| SIR | signal to interference ratio |
| TDD | time-division duplex |
| UE | user equipment |
| UMTS | universal mobile telecommunications system |

DETAILED DESCRIPTION OF PREFERRED EMBODIMENTS

Described hereinafter are a method and apparatus employing algorithms in one of the first and second embodiments for determination of code transmit power for downlink power control in cellular networks. The transmit power range lies between the upper bound and lower bound of the transmit power of a particular code. The method of the present invention determines an appropriate transmit power range (especially the upper bound) for each code so that when the transmit power of any code approaches its upper bound, the transmit power of other codes can be adjusted to stay within the dynamic range.

The solution of two present inventions determines the range of code transmit power using at least some of the following parameters: 1) number of codes in the downlink (time slot, if TDD); 2) the range of the SIR target of the code; 3) the maximum allowed dynamic range of the receiver used at the UE (dynamic power range of the receiver is the maximum allowed difference between transmit power of any codes); 4) average MUD efficiency factor in the downlink (for TDD only); 5) average orthogonal factor in the downlink (for FDD only); 6) average inter-cell to intra-cell interference ratio.

The inventive method permits cellular networks to determine the dynamic range of code transmit power in the downlink power control. In particular, it is applicable to all modes of UMTS systems (including FDD, HCR TDD, and LCR TDD).

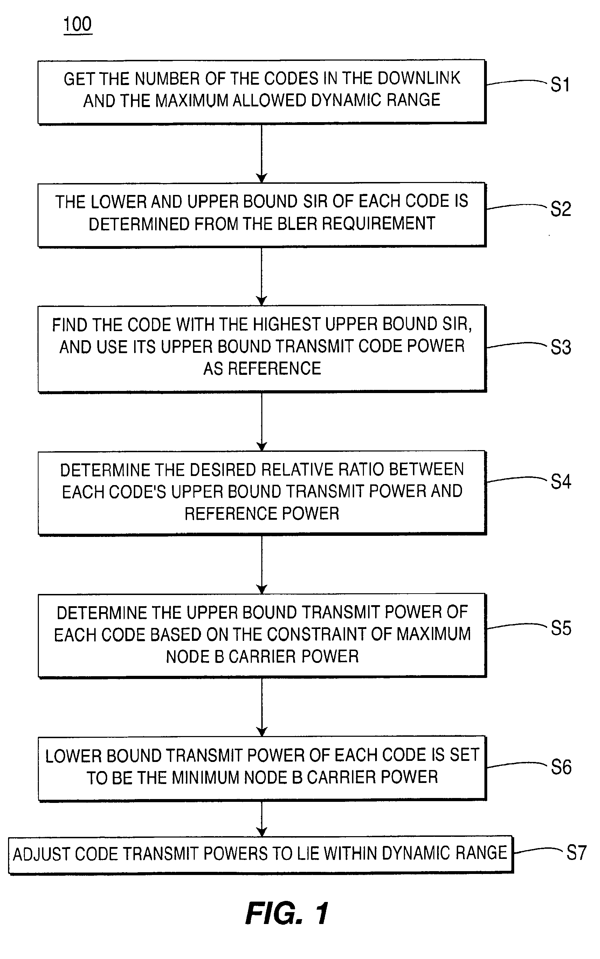

The method 100 of the first embodiment, shown in Figure 1, uses the following information to determine the range of code transmit-power:

The number of codes in the downlink (time slot, if TDD), denoted by $N$, at step S1 is obtained;

The range of the SIR target of the code i: the lower bound $SIR_{lb}(i)$ and upper bound $SIR_{ub}(i)$, is then obtained (step S2). The range is determined by the C-RNC from the BLER requirement of service and possible propagation conditions. For example, the upper bound is the SIR target corresponding to the SIR in the worst case (known as case 1 in the technical literature) and the lower bound is the SIR target corresponding to the best case (known as the AWGN case in the technical literature); and

The maximum allowed dynamic range of the receiver used at the UE is DR, the value of which depends on the design of the receiver. Therefore, $DR$ is a design parameter that can be configured by the operator.

The code transmit power range is determined as follows. First, among all the codes, the code with maximum upper bound SIR target, say code $j$, is selected (step S3). The upper bound of the transmit power of code $i$ is denoted by $TXCode_{ub}(i)$ which is used as a reference. The relationship between the upper bound of code transmit power of code $i$ and code $j$ (the code with maximum upper bound SIR target), obtained at step S4, is expressed as:

$$TXCode_{ub}(i) = R(i) \cdot TXCode_{ub}(j) \qquad \text{Equation 1}$$

where $R(i)$, the desired ratio between $TXCode_{ub}(i)$ and $TXCode_{ub}(j)$, is

$$R(i) = \begin{cases} \dfrac{SIR_{ub}(i)}{SIR_{ub}(j)} & if \ \dfrac{SIR_{ub}(j)}{SIR_{ub}(i)} \le DR \\ \dfrac{1}{DR} & if \ \dfrac{SIR_{ub}(j)}{SIR_{ub}(i)} > DR \end{cases} \qquad \text{Equation 2}$$

The sum of upper bound of code transmit power is subject to the limit of maximum Node B carrier power, $CATX_{max}$, (step S5). For system stability purposes, a margin is used to prevent the total code transmit-power to reach the maximum allowed value. The margin, a design parameter, can be configured by the operator as:

$$\sum_{i=1}^{N} TXCode_{ub}(i) = CATX_{max} / Margin \qquad \text{Equation 3}$$

Therefore, the upper bound of the transmit power of code i is given by

$$TXCode_{ub}(i) = \frac{R(i)}{\sum\limits_{i=1}^{N} R(i)} \left(CATX_{max} / Margin\right) \qquad \text{Equation 4}$$

The lower bound of code transmit power, obtained at step S6, is set to the minimum allowed carrier power of the Node B.
$$TXCode_{lb}(i) = CATX_{min} \qquad \text{Equation 5}$$

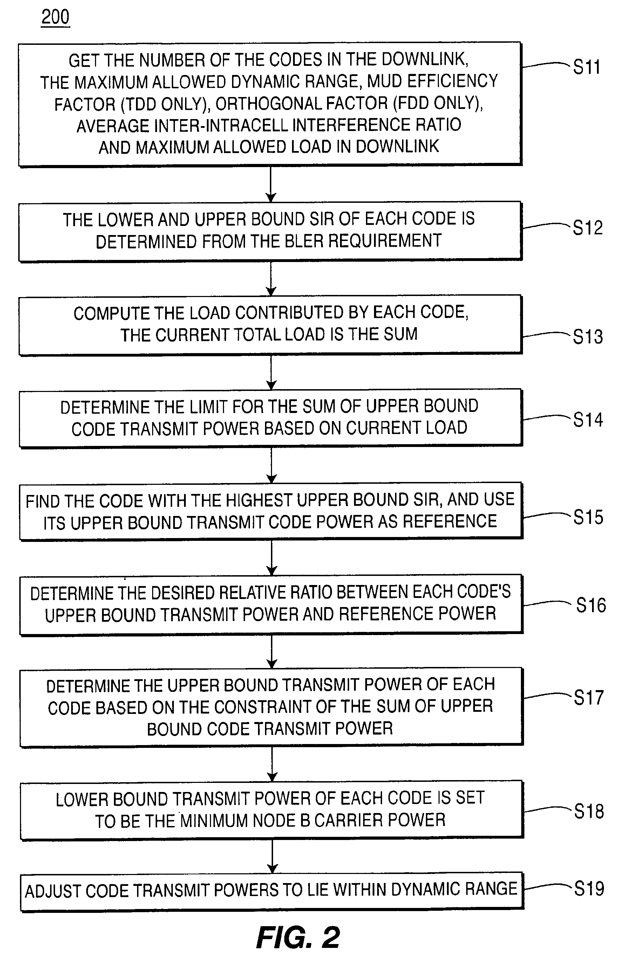

The code transmit powers are then adjusted to lie within the dynamic range (step S7). The method 100 will configure or reconfigure the range of code transmit power whenever the number of codes in the downlink changes, which includes: radio link setup for a new CCTrCH and radio link release for an existing CCTrCH. Accordingly, the method 100 is suitable for a real-time services scenario, where the number of codes changes relatively slowly.
A second embodiment of a method 200 in accordance with the present invention, shown in Figure 2, uses the following information to determine the range of code transmit power: 1) the number of codes in the downlink (time slot, if TDD), denoted by $N$; 2) the range of SIR target of the code i: the lower bound $SIR_{lb}(i)$ and upper bound $SIR_{ub}(i)$ which are determined from the BLER requirement; 3) the maximum allowed dynamic range of receiver used at the UE, $DR$; 4) average MUD efficiency factor in the downlink (for TDD only), $\alpha$; 5) average orthogonal factor in the downlink (for FDD only), $\alpha$; 6) average inter-cell to intra-cell interference ratio, $\eta$; and 7) maximum allowed load in the downlink, $Load_{max}$. This is a design parameter that can be configured by the operator and executed by the call admission control function. These data are obtained at steps S11 and S12.
Code transmit power range is then determined as follows: The current load in the downlink (time slot, if TDD) is computed (S 13). Among all the codes, the code with maximum upper bound SIR target, say code $j$, is selected (step S14).
The load contributed by each code $i$ is given by:
$$Load(i) = (1 - \alpha + \eta) \cdot SIR_{ub}(i) \, , \, \text{if } \frac{SIR_{ub}(j)}{SIR_{ub}(i)} \leq DR \qquad , \qquad \text{Equation 6}$$

$$Load(i) = (1 - \alpha + \eta) \cdot (SIR_{ub}(j) / DR) \, , \, \text{if } \frac{SIR_{ub}(j)}{SIR_{ub}(i)} > DR \, . \qquad \text{Equation 7}$$

Therefore, the total load is given by:
$$Load = \sum_{i=1}^{N} Load(i) \qquad \text{Equation 8}$$

The load in the downlink is controlled by the call admission control function to be no more than the maximum allowed load in the downlink, $Load_{max}$. The limit for the sum of code transmit power upper bounds, obtained at step S14, is set to be proportional to the current load. That is:
$$\sum_{i=1}^{N} TXCode_{ub}(i) = CATX'_{max} / Margin \text{, where} \qquad \text{Equation 9}$$

$$CATX'_{max} = \frac{Load}{Load_{max}} \cdot CATX_{max} \qquad \text{Equation 10}$$

The upper bound of the transmit power of code $i$ is $TXCode_{ub}(i)$. The relationship between the upper bound of code transmit power of code $i$ and code $j$ (the code with the maximum upper bound SIR target, obtained at step S15), is expressed as:
$$TXCode_{ub}(i) = R(i) \cdot TXCode_{ub}(j) \qquad \text{Equation 11}$$

Where $R(i)$, the desired ratio between $TXCode_{ub}(i)$ and $TXCode_{ub}(j)$, (obtained at step S16), is:
$$R(i) = \begin{cases} \dfrac{SIR_{ub}(i)}{SIR_{ub}(j)} & if \quad \dfrac{SIR_{ub}(j)}{SIR_{ub}(i)} \leq DR \\ \dfrac{1}{DR} & if \quad \dfrac{SIR_{ub}(j)}{SIR_{ub}(i)} > DR \end{cases} \qquad \text{Equation 12}$$

Therefore, the upper bound of transmit power of code $i$, (obtained at step S17), is given by:
$$TXCode_{ub}(i) = \frac{R(i)}{\sum_{i=1}^{N} R(i)} \left( CATX'_{max} / Margin \right) \qquad \text{Equation 13}$$

Utilizing equation 12 in equations 6-8, the result is:
$$Load = (1 - \alpha + \eta) \cdot SIR_{ub}(j) \cdot \sum_{i=1}^{N} R(i) \qquad \text{Equation 14}$$

Likewise, utilizing equation 14 in equation 10 provides:
$$CATX'_{max} = \frac{(1 - \alpha + \eta) \cdot SIR_{ub}(j) \cdot \sum_{i=1}^{N} R(i)}{Load_{max}} \cdot CATX_{max} \qquad \text{Equation 15}$$

Finally, utilizing 15 in equation 13 yields:
$$TXCode_{ub}(i) = \frac{(1 - \alpha + \eta) \cdot R(i) \cdot SIR(j)}{Load_{max}} \cdot \frac{CATX_{max}}{Margin} \qquad \text{Equation 16}$$

The lower bound of the code transmit power (obtained at step S18), is set to be the minimum allowed carrier power of the Node B as:
$$TXCode_{lb}(i) = CATX_{min} \qquad \text{Equation 17}$$

The code transmit powers are then adjusted to lie within the dynamic range (step S19).
The method 200 shown in Figure 2 does not necessarily need to configure or reconfigure the range of code transmit power when the number of codes in the downlink changes. As shown in equation 16, the transmit power range for a code is determined by its SIR upper bound and maximum SIR upper bound of codes in the downlink (time slot, if TDD). As long as the maximum SIR upper bound of codes in the downlink (time slot, if TDD) does not change the value of $R(i) \cdot SIR_{ub}(j)$, the range of code transmit power will not change. As a result, the frequency of reconfiguration of the code transmit power range is much less than the frequency at which the number of codes changes. Therefore, this algorithm is suitable for a non-real-time services scenario, where the number of codes changes quickly. In addition, it is also suitable for a real-time services scenario as well.
The flow diagram of Figure 1 shows the preferred sequence of operations for implementing the first algorithm. Initially, the number of the codes in the downlink and the maximum allowed dynamic range are obtained, followed by steps which operate on the data obtained to achieve the desired result. However, the steps may be altered in sequence without departing from the scope of the invention.
The flow diagram of Figure 2 shows the preferred sequence of operations for implementing the second algorithm. The process initially obtains the number of codes in the downlink, the maximum allowed dynamic range, MUD efficiency factor (as applied to TDD only), orthogonal factor (as applied to FDD only), average inter-intracell interference ratio, and maximum allowed load in downlink, followed by operations on these data to achieve the desired result. Here too, the steps may be altered in sequence without departing from the scope of the invention.
Even though the above description makes reference to FDD and TDD systems as examples, the invention for downlink power control is applicable to other types of communication systems as well.

Itemized List of Embodiments

1. A method for determining code transmit power in a time division duplex communication system, comprising:

a) obtaining a number of codes in a downlink and a maximum allowed dynamic range;
b) determining an upper bound and a lower bound of a signal to interference ratio (SIR) of each code based on a block error rate (BLER) requirement;
c) computing a load contributed by each code;
d) summing the load to obtain a current total load;
e) determining a limit for a sum of upper bound code transmit power based on a current load;
f) determining a code with the highest upper bound SIR;
g) employing the upper bound code transmit power of the code having the highest upper bound SIR;
h) determining a desired relative ratio between the upper bound code transmit power of each code and a reference;
i) determining the upper bound transmit power of each code based on a sum of the upper bound code transmit power; and
j) setting a lower bound transmit power for each code based on a minimum Node B carrier power.

2. The method of item 1, further comprising:

adjusting code transmit powers to lie within a dynamic range.

3. The method of item 1, wherein step (a) further comprises:

obtaining a multi-user detector (MUD) efficiency factor and average inter-intracell interference ratio and a maximum allowed load in downlink.

4. The method of item 1, wherein step (b) further includes selecting an SIR target corresponding to an SIR in a worst case as the upper bound.

5. The method of item 1, wherein step (b) further includes selecting an SIR target corresponding to an SIR in a best case.

6. A method for determining code transmit power in a frequency division duplex communication system, comprising:

a) obtaining a number of codes in a downlink and a maximum allowed load in the downlink;
b) determining an upper bound and a lower bound of a signal to interference ratio (SIR) of each code based on a block error rate (BLER) requirement;
c) computing a load contributed by each code;
d) summing the load to obtain a current total load;
e) determining a limit for a sum of upper bound code transmit power based on a current load;
f) determining a code with a highest upper bound SIR;
g) employing the upper bound code transmit power of the code having the highest upper bound SIR;
h) determining a desired relative ratio between the upper bound code transmit power of each code and a reference;
i) determining the upper bound transmit power of each code based on a sum of the upper bound code transmit power; and
j) setting a lower bound transmit power for each code based on a minimum Node B carrier power.

7. The method of item 6, further comprising:

adjusting code transmit powers to lie within a dynamic range.

8. The method of item 6, wherein step (a) further comprises:

obtaining a maximum allowed dynamic range, an orthogonal factor, and an average inter-intracell interference ratio.

9. The method of item 6, wherein step (b) further includes selecting an SIR target corresponding to an SIR in a worst case as the upper bound.

10. The method of item 6, wherein step (b) further includes selecting an SIR target corresponding to an SIR in a best case.

11. A method for determining code transmit power, comprising:

a) obtaining a number of codes in a downlink in a maximum allowed dynamic range;
b) determining a lower bound and an upper bound signal-to-interference ratio (SIR) of each code based on a block error rate (BLER) criteria;
c) determining a code with a highest upper bound SIR and establishing its upper bound transmit code power as a reference;
d) determining a desired relative ratio between each code upper bound transmit power and the reference;
e) determining an upper bound transmit power of each code based on a constraint of a maximum Node B carrier power; and
f) setting a lower bound transmit power for each code at a minimum Node B carrier power.

12. The method of item 11, wherein step (b) further includes selecting an SIR target corresponding to an SIR in a worst case as the upper bound.

13. The method of item 11, wherein step (b) further includes selecting an SIR target corresponding to an SIR in a best case.

14. Apparatus for determining code transmit power in a time division duplex communication system comprising:

means for obtaining a number of codes in a downlink and a maximum allowed load in the downlink;
means for determining an upper bound and a lower bound of a signal to interference ratio (SIR) of each code based on a block error rate (BLER) requirement;
means for computing a load contributed by each code;
means for summing the load to obtain a current total load;
means for determining a limit for a sum of upper bound code transmit power based on the current load;
means for determining a code with the highest upper bound SIR;
means for employing the upper bound code transmit power of the code having the highest upper bound SIR;
means for determining a desired relative ratio between each code upper bound transmit power and a reference;
means for determining an upper bound transmit power of each code based on a sum of the upper bound code transmit power; and
means for setting a lower bound transmit power for each code based on a minimum Node B carrier power.

15. The apparatus of item 14, further comprising:

means for adjusting the code transmit powers to lie within a dynamic range.

16. The apparatus of item 14, wherein said means for obtaining further comprises:

means for obtaining a maximum allowed dynamic range, a multiple user detector (MUD) efficiency factor, and an average inter-intracell interference ratio.

17. Apparatus for determining code transmit power in a frequency division duplex communication system, comprising:

means for obtaining a number of codes in a downlink and a maximum allowed load in downlink;
means for determining an upper bound and a lower bound of a signal to interference ratio (SIR) of each code based on a block error rate (BLER) requirement;
means for computing a load contributed by each code;
means for summing the load to obtain a current total load;
means for determining a limit for a sum of upper bound code transmit power based on the current load;
means for determining a code with the highest upper bound SIR;
means for employing the upper bound code transmit power of the code having the highest upper bound SIR;
means for determining a desired relative ratio between the code upper bound transmit power of each code and a reference;
means for determining the upper bound transmit power of each code based on a sum of the upper bound code transmit power; and
means for setting a lower bound transmit power for each code based on a minimum Node B carrier power.

18. The apparatus of item 17, further comprising:

means for adjusting the code transmit powers to lie within a dynamic range.

19. The apparatus of item 17, wherein said means for obtaining further comprises:

means for obtaining a maximum allowed dynamic range, an orthogonal factor and an average inter-intracell interference ratio.

20. Apparatus for determining code transmit power, comprising:

means for obtaining a number of codes in a downlink in a maximum allowed dynamic range;
means for determining a lower bound and an upper bound signal-to-interference ratio (SIR) of each code based on a block error rate (BLER) criteria;
means for determining the code with a highest upper bound SIR and establishing its upper bound transmit code power as a reference;
means for determining a desired relative ratio between the upper bound code transmit power of each code and the reference;
means for determining an upper bound transmit power of each code based on a constraint of a maximum Node B carrier power; and
means for setting a lower bound transmit power for each code at a minimum Node B carrier power.

## Claims

1. A method for determining code transmit power in a frequency division duplex communication system, comprising:

   a) obtaining a number of codes in a downlink and a maximum allowed load in the downlink;
   b) determining an upper bound and a lower bound of a signal to interference ratio, SIR, of each code based on a block error rate, BLER, requirement;
   c) computing a load contributed by each code;
   d) summing each load computed at step (c) to obtain a current total load;
   e) determining a limit for a sum of upper bound code transmit power based on a current load;
   f) determining a code with a highest upper bound SIR;
   g) employing the code determined at step (f) as a reference;
   h) determining a desired relative ratio between the upper bound code transmit power of each code and said reference;
   i) determining the upper bound transmit power of each code based on a sum of the upper bound code transmit power; and
   j) setting a lower bound transmit power for each code based on a minimum Node-B carrier power.

2. The method of claim 1, further comprising:

   adjusting code transmit powers to lie within a dynamic range.

3. The method of claim 1, wherein step (a) further comprises:

   obtaining a maximum allowed dynamic range, an orthogonal factor, and an average inter-intracell interference ratio.

4. The method of claim 1, wherein step (b) further includes selecting an SIR target corresponding to an SIR in a worst case as the upper bound.

5. The method of claim 1, wherein step (b) further includes selecting an SIR target corresponding to an SIR in a best case.

6. The method of claim 1 wherein step (b) further comprises:

   determining the range of SIR target of each code.

7. The method of claim 1 wherein step (a) further comprises:

   for time division duplex, TDD, determining an average multi-user detector, MUD efficiency factor in the downlink.

8. The method of claim 1 wherein step (a) further comprises:

   determining a maximum allowed dynamic range of a receiver at a user equipment, UE.

9. The method of claim 8 wherein the orthogonal factor obtained is an average orthogonal factor.

10. Apparatus for determining code transmit power in a frequency division duplex communication system, comprising:

    first means for obtaining a number of codes in a downlink and a maximum allowed load in downlink;
    second means for determining an upper bound and a lower bound of a signal to interference ratio, SIR, of each code based on a block error rate, BLER, requirement;
third means for computing a load contributed by each code;
fourth means for summing the loads computed by the third means to obtain a current total load;
fifth means for determining a limit for a sum of upper bound code transmit power based on the current load;
sixth means for determining a code with the highest upper bound SIR;
seventh means for employing the code determined by said sixth means as a reference;
eighth means for determining a desired relative ratio between the code upper bound transmit power of each code and said reference;
ninth means for determining the upper bound transmit power of each code based on a sum of the upper bound code transmit power; and
tenth means for setting a lower bound transmit power for each code based on a minimum Node B carrier power.

11. The apparatus of claim 10, further comprising:

eleventh means for adjusting the code transmit powers to lie within a dynamic range.

12. The apparatus of claim 10, wherein said first means further comprises:

means for obtaining a maximum allowed dynamic range, an orthogonal factor and an average inter-intracell interference ratio.

13. The apparatus of claim 10 wherein said second means further comprises:

means for determining the range of SIR target of each code.

14. The apparatus of claim 10 wherein said first means further comprises:

for time division duplex, TDD, means for determining an average multi-user detector, MUD, efficiency factor in the downlink.

15. The apparatus of claim 10 wherein said first means further comprises:

means determining a maximum allowed dynamic range of a receiver at a user equipment, UE.

16. The apparatus of claim 15 wherein the orthogonal factor obtained by said first means is an average orthogonal factor.

<u>100</u>

```
┌─────────────────────────────────────────────┐
│ GET THE NUMBER OF THE CODES IN THE DOWNLINK   │───── S1
│ AND THE MAXIMUM ALLOWED DYNAMIC RANGE         │
└─────────────────────────────────────────────┘
                      │
                      ▼
┌─────────────────────────────────────────────┐
│ THE LOWER AND UPPER BOUND SIR OF EACH CODE IS │───── S2
│ DETERMINED FROM THE BLER REQUIREMENT          │
└─────────────────────────────────────────────┘
                      │
                      ▼
┌─────────────────────────────────────────────┐
│ FIND THE CODE WITH THE HIGHEST UPPER BOUND SIR,│
│ AND USE ITS UPPER BOUND TRANSMIT CODE POWER   │───── S3
│ AS REFERENCE                                  │
└─────────────────────────────────────────────┘
                      │
                      ▼
┌─────────────────────────────────────────────┐
│ DETERMINE THE DESIRED RELATIVE RATIO BETWEEN  │
│ EACH CODE'S UPPER BOUND TRANSMIT POWER AND    │───── S4
│ REFERENCE POWER                               │
└─────────────────────────────────────────────┘
                      │
                      ▼
┌─────────────────────────────────────────────┐
│ DETERMINE THE UPPER BOUND TRANSMIT POWER OF   │
│ EACH CODE BASED ON THE CONSTRAINT OF MAXIMUM  │───── S5
│ NODE B CARRIER POWER                          │
└─────────────────────────────────────────────┘
                      │
                      ▼
┌─────────────────────────────────────────────┐
│ LOWER BOUND TRANSMIT POWER OF EACH CODE IS SET │───── S6
│ TO BE THE MINIMUM NODE B CARRIER POWER        │
└─────────────────────────────────────────────┘
                      │
                      ▼
┌─────────────────────────────────────────────┐
│ ADJUST CODE TRANSMIT POWERS TO LIE WITHIN DYNAMIC RANGE │───── S7
└─────────────────────────────────────────────┘
```

## FIG. 1

<u>200</u>

| GET THE NUMBER OF THE CODES IN THE DOWNLINK, THE MAXIMUM ALLOWED DYNAMIC RANGE, MUD EFFICIENCY FACTOR (TDD ONLY), ORTHOGONAL FACTOR (FDD ONLY), AVERAGE INTER-INTRACELL INTERFERENCE RATIO AND MAXIMUM ALLOWED LOAD IN DOWNLINK | S11 |

| THE LOWER AND UPPER BOUND SIR OF EACH CODE IS DETERMINED FROM THE BLER REQUIREMENT | S12 |

| COMPUTE THE LOAD CONTRIBUTED BY EACH CODE, THE CURRENT TOTAL LOAD IS THE SUM | S13 |

| DETERMINE THE LIMIT FOR THE SUM OF UPPER BOUND CODE TRANSMIT POWER BASED ON CURRENT LOAD | S14 |

| FIND THE CODE WITH THE HIGHEST UPPER BOUND SIR, AND USE ITS UPPER BOUND TRANSMIT CODE POWER AS REFERENCE | S15 |

| DETERMINE THE DESIRED RELATIVE RATIO BETWEEN EACH CODE'S UPPER BOUND TRANSMIT POWER AND REFERENCE POWER | S16 |

| DETERMINE THE UPPER BOUND TRANSMIT POWER OF EACH CODE BASED ON THE CONSTRAINT OF THE SUM OF UPPER BOUND CODE TRANSMIT POWER | S17 |

| LOWER BOUND TRANSMIT POWER OF EACH CODE IS SET TO BE THE MINIMUM NODE B CARRIER POWER | S18 |

| ADJUST CODE TRANSMIT POWERS TO LIE WITHIN DYNAMIC RANGE | S19 |

## FIG. 2

**European Patent Office**

## EUROPEAN SEARCH REPORT

Application Number

EP 07 11 6169

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 01/71932 A (MATSUSHITA ELECTRIC IND CO LTD [JP]; HIRAMATSU KATSUHIKO [JP]; KATO OS) 27 September 2001 (2001-09-27) * paragraph [0001] - paragraph [0013] * & US 2003/076790 A1 (HIRAMATSU KATSUHIKO [JP] ET AL) 24 April 2003 (2003-04-24) * paragraph [0001] - paragraph [0013] * ----- | 1-16 | INV. H04B7/00 H04B7/212 H04J3/16 |

TECHNICAL FIELDS SEARCHED (IPC)

H04B

The present search report has been drawn up for all claims

| Place of search | Date of completion of the search | Examiner |
|---|---|---|
| Munich | 22 October 2007 | Sieben, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 11 6169

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2007

| Patent document cited in search report | | Publication date | Patent family member(s) | | Publication date |
|---|---|---|---|---|---|
| WO 0171932 | A | 27-09-2001 | AU | 3954601 A | 03-10-2001 |
| | | | CN | 1364342 A | 14-08-2002 |
| | | | EP | 1193886 A1 | 03-04-2002 |
| | | | JP | 2001267939 A | 28-09-2001 |
| | | | US | 2003076790 A1 | 24-04-2003 |
| US 2003076790 | A1 | 24-04-2003 | AU | 3954601 A | 03-10-2001 |
| | | | CN | 1364342 A | 14-08-2002 |
| | | | EP | 1193886 A1 | 03-04-2002 |
| | | | WO | 0171932 A1 | 27-09-2001 |
| | | | JP | 2001267939 A | 28-09-2001 |

EPO FORM P0459

For more details about this annex : see Official Journal of the European Patent Office, No. 12/82